# EUROPÄISCHE PATENTSCHRIFT

(11) **EP 1 974 880 B1**
(45) Veröffentlichungstag und Bekanntmachung des Hinweises auf die Patenterteilung: **03.08.2011**
(21) Anmeldenummer: 08004905.9
(22) Anmeldetag: 17.03.2008
(51) Int. Cl.: B26F 3/00, B65G 49/06, B26D 7/01, B26D 7/06, B26D 5/00, B26D 5/20

(54) **Vorrichtung zum Schneiden von Werkstücken**
Device for cutting workpieces
Dispositif de coupe de pièces usinées

(30) Priorität: 02.03.2007 AT 3412007
(43) Veröffentlichungstag der Anmeldung: 01.10.2008
(73) Patentinhaber: Perndorfer Maschinenbau KG, 4720 Kallham (AT)
(72) Erfinder: Wimmer, Erwin, 4720 Kallham (AT)
(74) Vertreter: Hübscher, Helmut

(56) Entgegenhaltungen:
- EP-A- 1 136 185
- EP-A- 1 172 189
- WO-A-2004/050516
- DE-A1- 4 127 177
- US-A- 4 496 515

## Beschreibung

Die Erfindung bezieht sich auf eine Vorrichtung zum Schneiden von von Fenster- oder Türöffnungen in einer Fertigteilwand, mit einem Wasserstrahlschneider, der einen das Schneidmittel bildenden Hochdruckwasserstrahl erzeugt, mit einer Stelleinrichtung zur Verlagerung des Wasserstrahlschneiders bezüglich der Werkstückoberfläche, mit einer das Werkstück aufnehmenden Transporteinrichtung, mit der das Werkstück entlang einer Bahn mit einem Vorschub verlagerbar ist und mit einer Steuereinrichtung zur Schnittführung des Wasserstrahlschneiders mit der Stelleinrichtung, wobei die Schnittführung sowohl mittels der Stelleinrichtung als auch mittels des Vorschubes erfolgt.

Derartige Vorrichtungen zum Schneiden von plattenförmigen Werkstücken sind beispielsweise aus der WO 2004/050516 AT und der EP 1 172 189 A bekannt, die sich aber konstruktionsbedingt nicht zum Schneiden von Fertigteilwänden aus Ziegeln eignen. Eine andere bekannte Vorrichtung (DE 238012 A1) wird beispielsweise zum Schneiden von Stahlbeton- bzw. Beton im Straßenbau, im Bauwesen sowie im Hochbau und in der Vorfertigung von Betonteilen verwendet. Diese insbesondere zum Schneiden von Beton entwickelte Vorrichtung erlaubt die Herstellung von Aussparungen und Fugen in bereits ausgehärtetem Beton mit geringem Werkzeugverschleiß. Der Schnitt erfolgt mit einem aus einer Düse mit einem Druck von rund 100 - 1000 MPa austretenden Wasserstrahl, wobei der Druck entsprechend der Festigkeit des Betons und der zu erreichenden Schnitttiefe gewählt wird.

Der Wasserstrahl wird in Abhängigkeit der von Sensoren aufgenommenen Messwerte von einer Robotersteuerung entlang einer vorgesehenen Schnittführung bewegt und durchtrennt dabei das zu schneidende Material. Der wesentliche Bestandteil dieser Vorrichtung ist die über Stellglieder bewegte und über eine Robotersteuerung geführte Düse, aus der der gebündelte gegen das zu schneidende Werkstück weisende Wasserstrahl austritt. Dazu wird das zu bearbeitende Werkstück im Arbeitsbereich der Schneidvorrichtung beispielsweise auf einem Bearbeitungstisch abgelegt und mit Orientierungsmarken für die optischen Sensoren der Schneidvorrichtung versehen. Über die Robotersteuerung erfolgt anschließend das Abfahren der Schnittkontur entsprechend des einprogrammierten und vorgesehenen Schnittverlaufes für die auszuschneidenden Konturen.

Mit einer derartigen Vorrichtung kann innerhalb kurzer Zeit jede beliebige Kontur aus dem Werkstück ausgeschnitten werden, wobei bei der Bearbeitung von mineralischen Baustoffen, wie beispielsweise Beton oder dergleichen, keine Staubbelastung der Umwelt durch das Wasser als Schneidmittel in Kauf genommen werden muss. Zudem kann mit einem derartigen Schneidverfahren eine besonders hohe Genauigkeit erzielt und können hohe Fertigungstoleranzen eingehalten werden. Als nachteilig hat es jedoch erwiesen, dass größere Platten sowie Wände, wie insbesondere vorgefertigte Ziegelfertigteilwände oder dergleichen mit eine derartigen Vorrichtung nur mit erheblichem Aufwand bearbeitet werden können, da zur Bearbeitung dieser Platten bzw. dieser Wände einen sehr großen Platzbedarf aufweisende Schneidtische verwendet werden müssen und zudem die Platten bzw. Wände vor einem Schneidvorgang auf dem Schneidtisch abzulegen sind, was beispielsweise bei Ziegelwänden, aufgrund ihrer mangelnden Zugbelastbarkeit nur mit erheblichem Aufwand möglich wäre.

Der Erfindung liegt die Aufgabe zugrunde eine Vorrichtung der eingangs geschilderten Art zu schaffen, die eine möglichst geringe Aufstellfläche benötigt und zudem auch die Möglichkeit des aufwandsarmen Bearbeitens von eine geringen Zugfestigkeit aufweisenden Wänden, insbesondere Ziegelwänden oder dergleichen, bietet.

Die Erfindung löst diese Aufgabe dadurch, dass eine die stehende Wand aufnehmende Transporteinrichtung vorgesehen ist, die eine auf einem Rollgang abgestellte Palette umfasst, mit der die Wand mit dem Vorschub in Vorschubrichtung entlang der Bahn verlagerbar ist.

Als erfindungswesentlich ist anzusehen, dass eine die Wand aufnehmende Transporteinrichtung vorzusehen ist, die zugleich die Vorschubeinrichtung für die Schnittführung bildet. Diese Transporteinrichtung setzt sich vorzugsweise aus einer Fördereinrichtung und einem Schlitten zusammen, welcher Schlitten die Wand aufnimmt und gleichzeitig eine Palette darstellt, mit der die stehende Wand zur Vorrichtung transportiert, in der Vorrichtung bearbeitet und anschließend aus der Vorrichtung abtransportiert werden kann. So kann die zu bearbeitende Wand auf dieser Palette vorgebaut bzw. aufgemauert werden und anschließend sogleich mit der Palette an die Vorrichtung zum Schneiden der Wand übergeben werden, wo anschließend die exakten gewünschten Randmaße, Fenster öffnungen, Türöffnungen oder dergleichen bearbeitet bzw, aus der Wand herausgeschnitten werden. Wird eine stehende Wand bearbeitet und erfolgt die Schnittführung sowohl mittels der Stelleinrichtung als auch mittels des Vorschubes der Transporteinrichtung, wird eine kompakte Vorrichtung mit geringem Platzbedarf geschaffen, die sich in jeder Montagehalle problemlos unterbringen lässt.

Diese Vorrichtung eignet sich zur Bearbeitung beliebiger Werkstücke beispielsweise aus Beton, Ziegelstein, Holz, Glas, Metall und dgl., wie insbesondere Wände, Lärmschutzwände, Säulen, Fertigteile und viele mehr, wobei diese Aufzählung keinesfalls als abschließend aufzufassen ist.

Der Wasserstrahlschneider ist dabei seitlich neben der Bahn mittels der Stelleinrichtung quer zur Vorschubrichtung der Transporteinrichtung, also vorzugsweise im wesentlichen vertikal, derart verlagerbar, dass er stets den gewünschten bzw. erforderlichen Abstand zum zu bearbeitenden Werkstück einhält. Zu diesem Zweck können entsprechende Stellelemente vorgesehen sein.

Sind besonders dicke Wände bzw. Platten zu bearbeiten, sind sehr saubere Schnittkanten von beiden Seiten der Wand her gewünscht bzw. zur Erhöhung der Schnittleistung kann es erforderlich sein, zwei, vorzugsweise an je einem Steher, verlagerbare Wasserstrahlschneider vorzusehen, wobei die Transporteinrichtung für die stehende Wand zwischen den beiden Wasserstrahlschneidern angeordnet ist. Der Schnitt kann mit den beiden Wasserstrahlschneidern derart erfolgen, dass die beiden Druckwasserstrahlen gegeneinander gerichtet sind und die Schnittführung, insbesondere die Ansteuerung der Stelleinrichtung für die beiden Wasserstrahlschneider, synchron erfolgt. Die Ansteuerung der beiden Wasserstrahlschneider erfolgt dabei vorzugsweise von einer Steuereinrichtung her derart, dass die Schnittlinien der beiden Wasserstrahlschneider zumindest im Wesentlichen auf einer gemeinsamen Achse liegen. Leichte Abweichungen davon, wie beispielsweise das Voreilen eines Wasserstrahlschneiders gegenüber dem anderen, können dabei je nach Art des zu schneidenden Materials durchaus erwünscht sein.

Um ein Kippen der Wand in der Vorrichtung zu vermeiden kann es von Vorteil sein, wenn den Stehern Abstützeinrichtungen für die Wand zugeordnet sind, die quer zur Vorschubrichtung gegen die Wandoberfläche anstellbar sind. Diese Abstützeinrichtungen sind beispielsweise beidseits der Wasserstrahlschneider und seitlich der Transporteinrichtung vorzusehen und können zugleich als eine Art Wasserfang ausgebildet sein, um vom zu schneidenden Material gegebenenfalls abgelenkte Wasserstrahlen gesichert aufzufangen und dem Abfluss zuzuleiten, womit ein ungesichertes Austreten dieser Wasserstrahlen aus der Vorrichtung vermieden werden soll.

Zur Erhöhung der Bearbeitungsgenauigkeit der erfindungsgemäßen Vorrichtung können Sensoren zur Vermessung des zu bearbeitenden Werkstückes und/oder Sensoren zur Bestimmung der Lage der Schneidachsen des wenigstens einen Wasserstrahlschneiders bezüglich des Werkstückes vorgesehen sein.

Das erfindungsgemäße Verfahren zum Schneiden einer Fertigteilwand od. dgl., mit einem Hochdruckwasserstrahl der bezüglich der Wandoberfläche zur Schnittführung verlagert wird, zeichnet sich gemäß der Erfindung dadurch aus, dass die zu bearbeitende Wand auf einer Palette aufgemauert wird, wonach die Palette mit der Wand an die Vorrichtung zum Schneiden der Wand übergeben wird, worauf die stehende Wand mit der Palette zur Schnittführung des Hochdruckwasserstrahls in einer Richtung der Schnittebene und der Hochdruckwasserstrahl quer dazu verlagert werden, wobei der Schnitt vorzugsweise mittels zweier zumindest im Wesentlichen gegeneinander gerichteter und synchron geführter Hochdruckwasserstrahlen erfolgt.

Die Erfindung ist in der Zeichnung anhand eines Ausführungsbeispieles schematisch dargestellt. Es zeigen
- Fig. 1: eine erfindungsgemäße Vorrichtung in Vorderansicht und

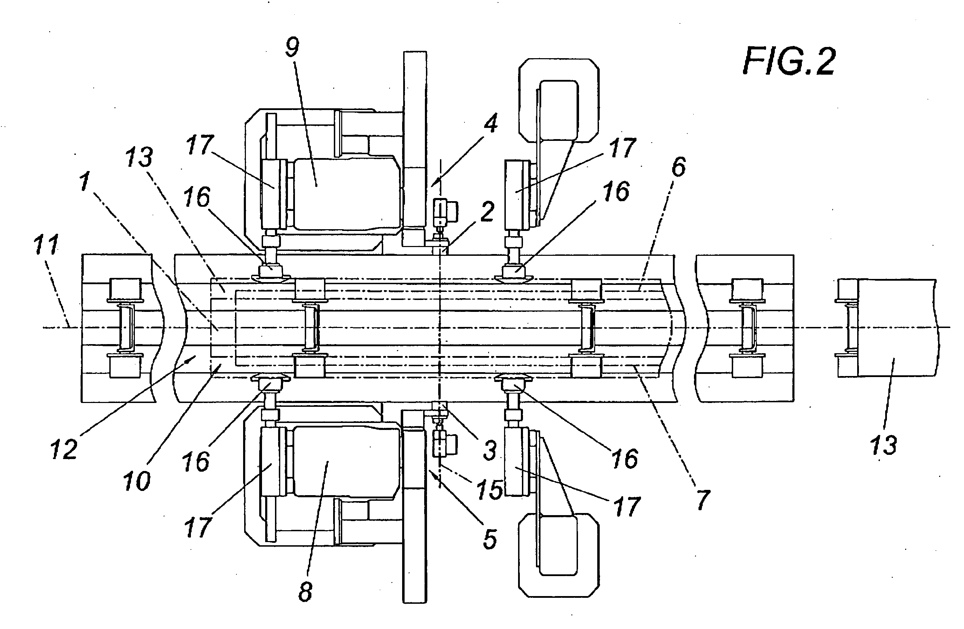

- Fig. 2: die Vorrichtung aus Fig. 1 in Draufsicht.

Eine Vorrichtung zum Schneiden einer Wand 1, insbesondere einer Ziegelfertigteilwand, umfasst unter anderem zwei Wasserstrahlschneider 2, 3 die je einen das Schneidmittel bildenden Hochdruckwasserstrahl erzeugen und mit je einer Stelleinrichtung 4, 5 bezüglich der Wandoberfläche 6, 7 entlang einer an je einem Steher 8, 9 vorgesehenen Geradführung vertikal mit einer nicht näher dargstellten Stelleinrichtung verlagerbar sind. Ebenso ist der Abstand A der Wasserstrahlschneider 2, 3 zur Wandoberfläche 6, 7 mit geeigneten Stelltrieben einstellbar. Die Schnittführung der Wasserstrahlschneider 2, 3 erfolgt einerseits mit den Stelleinrichtung 4, 5 und anderseits mittels einer die Wand aufnehmenden Transporteinrichtung 10, mit der die Wand 1 entlang einer Bahn 11 mit einem Vorschub verlagerbar ist. Die Transporteinrichtung 10 umfasst eine auf einem Rollgang 12 abgestellte Palette 13 mit der die Wand 1 in Vorschubrichtung entlang der Bahn 11 verlagerbar ist.

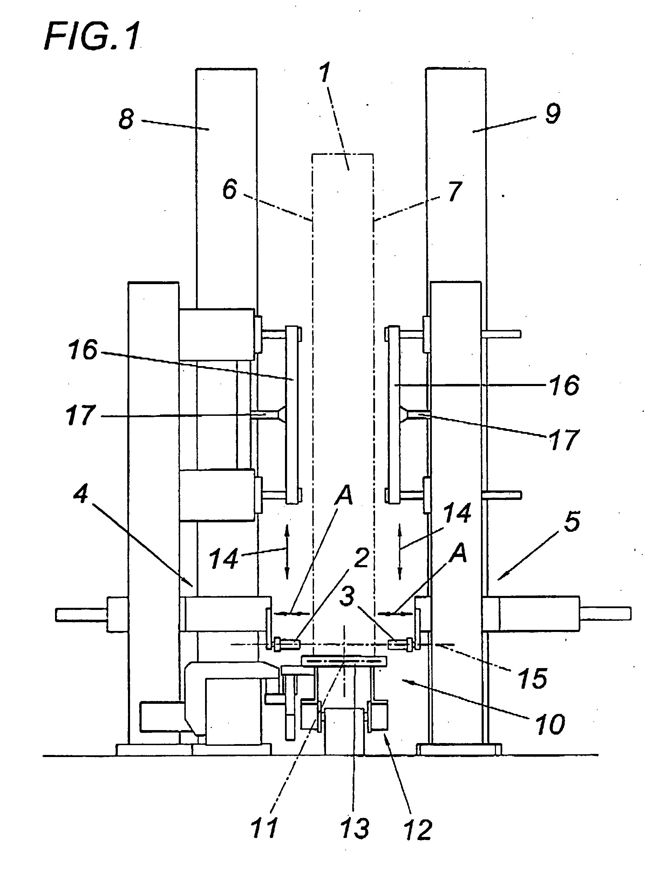

Die beiden Wasserstrahlschneider 2, 3 sind seitlich neben der Bahn 11 und die Stelleinrichtungen 4, 5 quer zur Vorschubrichtung der Transporteinrichtung 10 in Richtung der Pfeile 14 verlagerbar. Die Schnittführung der Wasserstrahlschneider 2, 3 zum Ausschneiden von beispielsweise Fenster bzw. Türöffnungen oder dergleichen aus der Wand 1 erfolgt einerseits mittels der Stelleinrichtungen 4, 5 und anderseits mittels des Vorschubes der Transporteinrichtung 10. Die Transporteinrichtung 10 ist zwischen den beiden Wasserstrahlschneidern 2, 3 angeordnet, wobei die Schnittlinien der beiden Wasserstrahlschneider 2, 3 während eines Schneidvorganges vorzugsweise zumindest im Wesentlichen auf einer gemeinsamen Achse 15 liegen, wie dies in der Fig. 1 angedeutet ist.

Den Stehern 8, 9 sind Abstützeinrichtungen 16 für die Wand 1 zugeordnet, die quer zur Vorschubrichtung gegen die Wandoberflächen 6, 7 mit Stellelementen 17 verlagerbar sind.

## Patentansprüche

1. Vorrichtung zum Schneiden von Fenster- oder Türöffnungen in einer Fertigteilwand (1), mit einem Wasserstrahlschneider (2, 3), der einen das Schneidmittel bildenden Hochdruckwasserstrahl erzeugt, mit einer Stelleinrichtung (4, 5) zur Verlagerung des Wasserstrahlschneiders bezüglich der Werkstückoberfläche (6, 7), mit einer das Werkstück aufnehmenden Transporteinrichtung (10), mit der das Werkstück entlang einer Bahn (11) mit einem Vorschub verlagerbar ist und mit einer Steuereinrichtung zur Schnittführung des Wasserstrahlschneiders (2, 3) mit der Stelleinrichtung (4, 5), wobei die Schnittführung sowohl mittels der Stelleinrichtung (4, 5) als auch mittels des Vorschubes erfolgt, **dadurch gekennzeichnet, dass** eine die stehende Wand (1) aufnehmende Transporteinrichtung (10) vorgesehen ist, die eine auf einem Rollgang (12) abgestellte Palette (13) umfasst, mit der die Wand (1) mit dem Vorschub in Vorschubrichtung entlang der Bahn (11) verlagerbar ist.

2. Vorrichtung nach Anspruch 1, **dadurch gekennzeichnet, dass** zwei, vorzugsweise an je einem Steher (8, 9), verlagerbare Wasserstrahlschneider (2, 3) vorgesehen sind, wobei die Transporteinrichtung (10) für das stehende Werkstück (1) zwischen den beiden Wasserstrahlschneidern (2, 3) angeordnet ist und die Wasserstrahlschneider (2, 3) seitlich der Bahn mit der Stelleinrichtung (4, 5) quer zur Vorschubrichtung der Transporteinrichtung (10) verlagerbar sind.

3. Vorrichtung nach Anspruch 2, **dadurch gekennzeichnet, dass** die Schnittlinien der beiden Wasserstrahlschneider (2, 3) zumindest im wesentlichen auf einer gemeinsamen Achse (15) liegen.

4. Vorrichtung nach einem der Ansprüche 2 bis 3, **dadurch gekennzeichnet, dass** den Stehern (8, 9) Abstützeinrichtungen (16) für das Werkstück (1) zugeordnet sind, die quer zur Vorschubrichtung der Transporteinrichtung (10) gegen die Werkstückoberflächen (6, 7) anstellbar sind.

5. Vorrichtung nach einem der Ansprüche 1 bis 4, **dadurch gekennzeichnet, dass** Sensoren zur Vermessung des zu bearbeitenden Werkstückes (1) und/oder Sensoren zur Bestimmung der Lage der Schneidachsen des wenigstens eines Wasserstrahlschneiders (2, 3) bezüglich der Wand (1) vorgesehen sind.

6. Verfahren zum Schneiden einer Fertigteilwand (1), mit einer Vorrichtung nach einem der der Ansprüche 1 bis 5, mit einem Hochdruckwasserstrahl, der bezüglich der Werkstückoberfläche (6, 7) zur Schnittführung verlagert wird, **dadurch gekennzeichnet, dass** die zu bearbeitende Wand auf einer Palette aufgemauert wird, wonach die Palette mit der Wand an die Vorrichtung zum Schneiden der Wand übergeben wird, worauf die stehende Wand mit der Palette zur Schnittführung des Hochdruckwasserstrahls in einer Richtung der Schnittebene und der Hochdruckwasserstrahl quer dazu verlagert werden.

7. Verfahren nach Anspruch 6, **dadurch gekennzeichnet, dass** der Schnitt mittels zweier zumindest im Wesentlichen gegeneinander gerichteter und synchron geführter Hochdruckwasserstrahlen erfolgt.

## Claims

1. Apparatus for cutting window or door openings in a prefabricated wall (1), having a water jet cutter (2, 3) which produces a high-pressure water jet forming the cutting means, having an adjustment device (4, 5) for displacing the water jet cutter relative to the workpiece surface (6, 7), having a transport device (10) receiving the workpiece, by means of which the workpiece is displaceable along a path (11) at a feed rate, and having a control device for guiding the cut of the water jet cutter (2, 3) with the adjustment device (4, 5), wherein the cut is guided by means of the adjustment device (4. 5) as well as by means of the feed rate, **characterised in that** a transport device (10) receiving the vertical wall (1) is provided and includes a palette (13) placed on a roller conveyor (12), by means of which palette the wall (1) can be displaced along the path (11) in the feed direction at the feed rate.

2. Apparatus as claimed in Claim 1, **characterised in that** two water jet cutters (2, 3) which can each preferably be displaced on an upright (8, 9) are provided, wherein the transport device (10) for the vertical workpiece (1) is disposed between the two water jet cutters (2, 3) and the water jet cutters (2, 3) can be displaced on the side of the path with the adjustment device (4, 5) transverse to the feed direction of the transport device (10).

3. Apparatus as claimed in Claim 2, **characterised in that** the cut lines of the two water jet cutters (2, 3) are at least substantially on a common axis (15).

4. Apparatus as claimed in any one of Claims 2 to 3, **characterised in that** support devices (16) for the workpiece (1) are allocated to the uprights (8, 9) and can be positioned against the workpiece surfaces (6. 7) transverse to the feed direction of the transport device (10).

5. Apparatus as claimed in any one of Claims 1 to 4, **characterised in that** sensors for measuring the workpiece (1) to be treated and/or sensors for determining the position of the cutting axes of the at least one water jet cutter (2, 3) relative to the wall (1) are provided.

6. Method for cutting a prefabricated wall (1) by means of an apparatus as claimed in any one of Claims 1 to 5. by means of a high-pressure water jet which is displaced relative to the workpiece surface (6, 7) for guiding the cut, **characterised in that** the wall to be treated is constructed on a palette, whereupon the palette with the wall is transferred to the apparatus for cutting the wall, whereupon the vertical wall with the palette is displaced in a direction of the cutting plane and the high-pressure water jet is displaced transverse thereto in order to guide the cut of the high-pressure water jet.

7. Method as claimed in Claim 6. **characterised in that** the cut is effected by means of two high-pressure water jets which are directed at least substantially towards each other and are guided synchronously.

## Revendications

1. Dispositif de coupe d'ouvertures de fenêtres ou de portes dans une paroi de pièce terminée (1), avec un découpeur à jet d'eau (2, 3), générant un jet d'eau à haute pression formant le moyen de coupe, avec un dispositif de réglage (4, 5) pour déplacer le découpeur à jet d'eau par rapport à la surface de pièce d'oeuvre (6, 7), avec un dispositif de transport (10), recevant la pièce d'oeuvre, à l'aide duquel la pièce d'oeuvre est déplaçable, avec une certaine avance, le long d'une piste (11), et avec un dispositif de commande pour le guidage de coupe du découpeur à jet d'eau (2, 3) avec le dispositif de réglage (4, 5), le guidage de coupe s'effectuant tant au moyen du dispositif de réglage (4, 5) qu'également au moyen de l'avance, **caractérisé en ce qu'**est prévu un dispositif de transport (10), supportant la paroi (1) verticale, qui comprend une palette (13) déposée sur un transporteur à rouleaux (12), à l'aide de laquelle la paroi (1) est déplaçable, avec la certaine avance, dans la direction d'avancement, le long de la piste (11).

2. Dispositif selon la revendication 1, **caractérisé en ce que** sont prévus deux découpeurs à jet d'eau (2, 3), de préférence déplaçables chacun sur un poteau (8, 9), le dispositif de transport (10) pour la pièce d'oeuvre (1) disposée verticalement étant situé entre les deux découpeurs à jet d'eau (2, 3), et les découpeurs à jet d'eau (2, 3) étant déplaçables latéralement à la piste, transversalement à la direction de transport du dispositif de transport (10), à l'aide du dispositif de réglage (4, 5).

3. Dispositif selon la revendication 2, **caractérisé en ce que** les lignes de coupe des deux découpeurs à jet d'eau (2, 3) sont situées au moins sensiblement sur un axe (15) commun

4. Dispositif selon l'une des revendications 2 à 3, **caractérisé en ce qu'**aux poteaux (8, 9) sont associés des dispositifs de soutien (16) pour la pièce d'oeuvre (1), susceptibles d'être appliqués contre les surfaces de la pièce d'oeuvre (6, 7), transversalement à la direction d'avancement du dispositif de transport (10).

5. Dispositif selon l'une des revendications 1 à 4, **caractérisé en ce que** sont prévus des capteurs servant à la mesure de la pièce d'oeuvre (1) à usiner et/ou des capteurs servant à la détermination de la position des axes de coupe du au moins un découpeur à jet d'eau (2, 3) par rapport à la paroi (1).

6. Procédé de coupe d'une paroi de pièce terminée (1), avec un dispositif selon l'une des revendications 1 à 5, avec un jet d'eau à haute pression, déplacé par rapport à la surface de pièce d'oeuvre (6, 7) pour assurer le guidage de la coupe, **caractérisé en ce que** la paroi à usiner est maçonnée sur une palette, à la suite de quoi la palette, avec la paroi, est transférée au dispositif de coupe de la paroi, à la suite de quoi la paroi disposée verticalement, avec la palette, est déplacée pour le guidage de coupe du jet d'eau sous haute pression, dans une direction du plan de coupe et le jet d'eau sous haute pression est déplacé transversalement à celui-ci.

7. Procédé selon la revendication 6, **caractérisé en ce que** la coupe est effectuée au moyen de deux jets d'eau sous haute pression, orientés au moins sensiblement l'un vers l'autre et guidés de manière synchrone.
